# EUROPEAN PATENT SPECIFICATION

(11) **EP 1 607 610 B1**
(45) Date of publication and mention of the grant of the patent: **12.10.2016**
(21) Application number: 04253661.5
(22) Date of filing: 18.06.2004
(51) Int. Cl.: F02K 1/00, F02K 1/12, F02K 1/62

(54) **Two-dimensional vectorable single expansion ramp nozzle**
Zweidimensionale Schwenkdüse eines Strahltriebwerkes
Tuyère orientable pour un turboréacteur

(43) Date of publication of application: 21.12.2005
(73) Proprietor: GENERAL ELECTRIC COMPANY, Schenectady, NY 12345 (US)
(72) Inventor: Walker, Alan Richard, Louisville Kentucky 40222 (US); Wooten, William Harvey, jr., Cincinnati Ohio 45241 (US); Van Sutherland, William, Milford Ohio 45150 (US); Holowach, Joseph, Cincinnati Ohio 45231 (US)
(74) Representative: Williams, Andrew Richard

(56) References cited:
- EP-A- 0 298 010
- US-A- 4 641 782
- US-A- 4 714 197
- US-A- 5 081 835
- US-A- 5 186 390

## Description

The invention relates to aircraft gas turbine engine two dimensional vectoring nozzles and, particularly, for such nozzles designed to block line of sight through the nozzle's exit.

High performance military aircraft typically include a turbofan gas turbine engine having an afterburner or augmenter for providing additional thrust when desired and some are being developed with two dimensional vectorable nozzles. The turbofan engine includes in downstream serial flow communication, a multistage fan, a multistage compressor, a combustor, a high pressure turbine powering the compressor, a low pressure turbine powering the fan, and the nozzle. During operation, air is compressed in turn through the fan and compressor and mixed with fuel in the combustor and ignited for generating hot combustion gases which flow downstream through the turbine stages which extract energy therefrom. The hot core gases are then discharged into an exhaust section of the engine which includes an augmenter from which they are discharged from the engine through the nozzle which is also typically variable area exhaust nozzle.

One type of two dimensional nozzle is a single expansion ramp nozzle referred to as a SERN nozzle. SERN was developed as a variable area non-axisymmetric nozzle with a unique installed performance characteristic of low weight and frictional drag because there is no or a smaller lower cowl. Low observable (LO) exhaust nozzle technology is being developed for current and future fighter/attack aircraft. LO nozzles should be integrated cleanly with the aircraft airframe and not degrade the aircraft's performance due to weight and drag penalties. Exhaust systems for combat aircraft should possess characteristics to enhance aircraft survivability, including high internal performance, reduced radar cross section (RCS), low infrared (IR) signatures, low installed weight, low installation drag and, in some cases, thrust-vectoring capabilities.

Two dimensional nozzles have been developed for the purpose of accomplishing thrust vectoring. Two dimensional vectorable exhaust nozzles incorporate upper and lower flaps that are angled simultaneously for the purpose of deflecting exhaust gas in an upward or downward direction. Increasing the angle of the flaps increases the amount of turning that is imparted to the exhaust gas flow. Examples of such nozzles are shown in US-A-5 186 390 and EP-A-0 298 010.

The augmenter includes an exhaust casing and liner therein which defines a combustion zone. Fuel spraybars and flameholders are mounted between the turbines and the exhaust nozzle for injecting additional fuel when desired during reheat operation for burning in the augmenter for producing additional thrust. In a bypass turbofan engine, an annular bypass duct extends from the fan to the augmenter for bypassing a portion of the fan air around the core engine to the augmenter. The bypass air is used in part for cooling the exhaust liner and also is mixed with the core gases prior to discharge through the exhaust nozzle. Turbojets, engines without bypass ducts may also use augmenters and variable area two dimensional nozzles.

Various types of flameholders are known and typically include radial and circumferential V-shaped gutters which provide local low velocity recirculation and stagnation regions therebehind, in otherwise high velocity core gas flow, for sustaining combustion during reheat operation. Since the core gases are the product of combustion in the core engine, they are initially hot when they leave the turbine, and are further heated when burned with the bypass air and additional fuel during reheat operation.

The hot parts of the engine visible along lines of sight through the exhaust nozzle produce an infrared signal or signature. The rotating turbine has a radar detectable signature or radar cross section (RCS). This invention relates to apparatus for reducing the engine's radar cross-section and suppressing and masking infrared (IR) emissions through engine exhaust ducts particularly those due to turbine and augmenter parts. Successful operation of combat aircraft is dependent, in part, upon the ability of the aircraft to remain undetected by infrared sensors and radars of missiles during flight. The high temperatures of the engine's exhaust gases and the hot metal turbine parts and the hot metal walls directly in contact with the hot gases cause the engine to emit high levels of infrared energy. Military aircraft engaged in combat are vulnerable to anti-aircraft missiles employing highly sophisticated infrared sensors and radar.

US 4,714,197 relates to a 2-D propulsive lift nozzle having features generally corresponding to the preamble of claim 1.

According to the invention, a two dimensional gas turbine engine exhaust nozzle having the features of claim 1 includes transversely spaced apart upper and lower convergent and divergent flaps extending longitudinally in a downstream direction along a nozzle axis and disposed between two widthwise spaced apart sidewalls. The upper and lower divergent flaps have inwardly facing upper and lower flap -surfaces defining together with the sidewalls at least a part of an exhaust stream flowpath therebetween. The upper and lower flap surfaces have respective upper and lower apexes, wherein the upper apex is axially spaced apart and aft of the lower apex. The upper divergent flap has an expansion ramp diverging away from the nozzle axis and includes a ramp section of the upper flap surface that extends aftwardly from the upper apex and aftwardly of a trailing edge of the lower divergent flap. The exemplary embodiment of the nozzle further includes transversely spaced apart upper and lower convergent and divergent flap axes extending widthwise between the sidewalls, wherein the upper convergent and divergent flaps are rotatable about the upper convergent and divergent flap axes and the lower convergent and divergent flaps are rotatable about the lower convergent and divergent flap axes, respectively.

In a more particular embodiment of the invention, the upper and lower divergent flaps are rotatably attached to downstream ends of the upper and lower convergent flaps along the upper and lower divergent flap axes, respectively. The upper and lower divergent flaps are operably rotatable to angularly vector an exhaust flow aft of the apexes upwardly and downwardly with respect to the nozzle axis. The divergent flaps are operably movable to block a line of sight along the nozzle axis through an exit of the nozzle during engine operation. The divergent flaps may be positioned to block a range of lines of sight through the nozzle exit at acute angles to the nozzle axis. A throat extends generally transversely across the exhaust stream flowpath between a first position on the lower apex to a second position on the upper divergent flap downstream of the upper flap axis. The upper divergent flap is generally convex and the lower divergent flap is generally concave between the upper and lower apexes, respectively. The exhaust stream flowpath diverges in the downstream direction between the lower apex and the upper apex. A more particular embodiment of the invention includes an air flow injection means for injecting air through air injection apertures in at least one of the upper and lower divergent flaps and the sidewalls. The air flow injection means includes at least one row of the air injection apertures in each of the upper and lower divergent flaps and the sidewalls. The air injection apertures may be located in at least one plane normal to a direction of exhaust flow in the exhaust stream flowpath along the upper apex.

The exemplary embodiment of the invention further includes, extending longitudinally in a downstream direction along a nozzle axis and in downstream serial flow relationship, a convergent section and a divergent section and a throat therebetween. The convergent section includes, in downstream serial flow relationship, transversely spaced apart upper and lower convergent non-rotatable walls, rotatable upper and lower reverser doors, and the upper and lower convergent flaps extending longitudinally in the downstream direction along the nozzle axis and disposed between the two widthwise spaced apart sidewalls. Transversely spaced apart upper and lower reverser door axes extend widthwise between the sidewalls wherein the upper and lower reverser doors are rotatable about the upper and lower reverser door axes, respectively. The upper and lower reverser doors rotatably open to upper and lower reverse air flow passages angled in an upstream direction from the exhaust stream flowpath to outside of the nozzle.

The invention will now be described in greater detail, by way of example, with reference to the drawings, in which:-
FIG. 1 is a longitudinal sectional view illustration of an exemplary embodiment of an aircraft gas turbine engine with a single expansion ramp nozzle having axially offset upper and lower apexes of upper and lower nozzle flaps respectively.
FIG. 2 is an enlarged longitudinal sectional view illustration of the nozzle in FIG. 1.
FIG. 3 is an enlarged view illustration of fluidic nozzle injection through 3-3 in FIG. 2.
FIG. 4 is a longitudinal sectional view illustration of the nozzle in FIG. 1. configured for cruise.
FIG. 5 is a longitudinal sectional view illustration of the nozzle in FIG. 1. configured wide open.
FIG. 6 is a longitudinal sectional view illustration of the nozzle in FIG. 1. configured for thrust reversal.
FIG. 7 is a longitudinal sectional view illustration of the nozzle in FIG. 1. configured for thrust vectoring in an upward direction.
FIG. 8 is a longitudinal sectional view illustration of the nozzle in FIG. 1. configured for thrust vectoring in a downward direction.

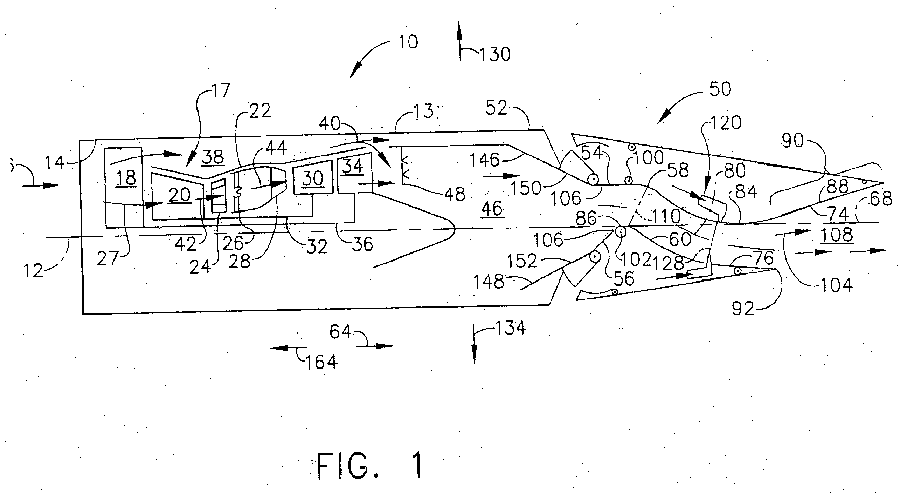

Illustrated in FIG. 1 is an exemplary gas turbofan engine 10 having an engine casing 13, of the fan bypass air type, including an exemplary embodiment of a two dimensional single expansion ramp exhaust nozzle 50 of the present invention. Disposed concentrically about a longitudinal centerline axis 12 of the engine 10, within the engine casing 13 is a core engine 17. The core engine 17 includes, in serial flow communication, an inlet 14 for receiving ambient air 16, a fan 18, and a high pressure compressor (HPC) 20 disposed within an annular core engine casing 22.

The core engine 17 further includes a diffuser 24 and a combustor 26 disposed in downstream serial flow communication with the HPC 20. The core engine 17 further includes, disposed in downstream serial flow communication with the combustor 26, a high pressure (HP) turbine nozzle 28 followed by a high pressure turbine (HPT) 30 for powering the HPC 20 through a HP shaft 32 extending therebetween. Downstream of the core engine 17 is a low pressure turbine (LPT) 34 that is in flow communication with the HPT 30 for powering the fan 18 through a LP shaft 36 extending therebetween.

The core engine casing 22 extends from the HPC 20 to the LPT 34 and is surrounded by a conventional bypass duct 38 for channeling a bypass portion of the ambient air 16 compressed in the fan 18 as bypass air 40. A core portion 27 of the air 16 which is not bypassed, is channeled into the HPC 20 which generates compressed airflow 42 which is discharged from the HPC 20 into the diffuser 24. The compressed airflow 42 is mixed with fuel and combusted in the combustor 26 for generating combustion gases 44 which are channeled through the HPT 30 and the LPT 34 and discharged into an afterburner or augmentor 46 located downstream of the LPT 34.

In a dry mode of operation, the augmentor 46 is not used and the combustion gases 44 are channeled therethrough. In a wet mode of operation, additional fuel is mixed with the combustion gases 44 and the bypass air 40 in a fuel injector and flameholder assembly 48 and ignited for generating additional thrust from the engine 10. The combustion gases 44 are discharged from the engine 10 through the exhaust nozzle 50. The nozzle 50 is suitably attached to a downstream end 52 of the engine casing 13 to transfer thrust generated by the nozzle to the engine 10.

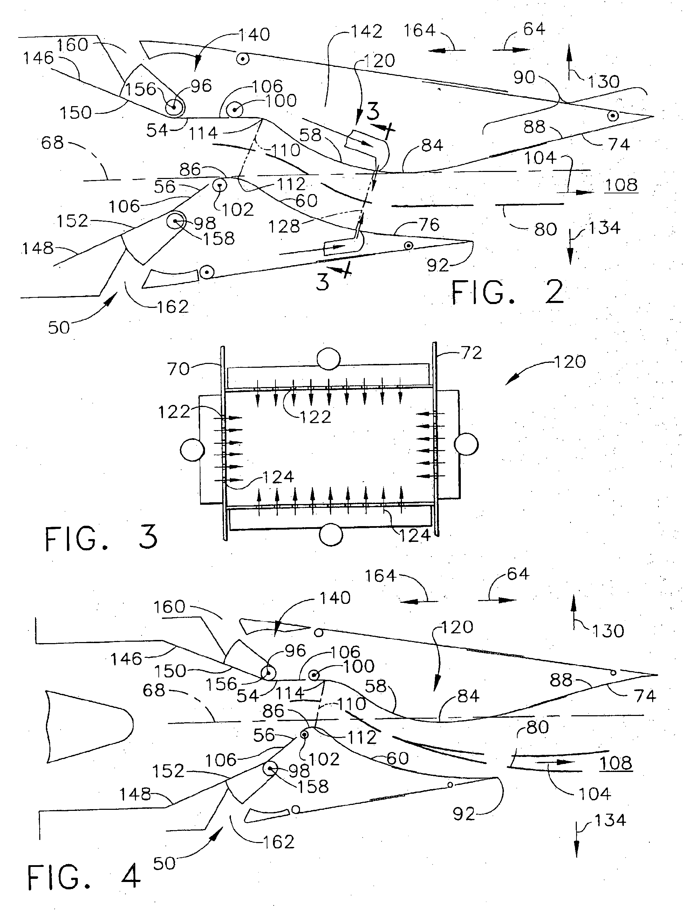

FIG. 2 illustrates an exemplary embodiment of the nozzle 50 which is a convergent divergent two dimensional gas turbine engine exhaust nozzle. The nozzle 50 includes transversely spaced apart upper and lower convergent flaps 54 and 56 and transversely spaced apart upper and lower divergent flaps 58 and 60, respectively, extending longitudinally in a downstream direction 64 along a nozzle axis 68 and disposed between two widthwise spaced apart first and second sidewalls 70 and 72 illustrated in FIG. 3. The nozzle axis 68 in the exemplary embodiment is collinear with the longitudinal centerline axis 12 but need not be in other embodiments or applications of the invention.

The invention is described in terms of upper and lower elements and upward and downward directions. This is for purpose of convenience and upper and lower flaps and other elements may be reversed. There are embodiments of the invention wherein the nozzle installation is upside down with respect to the embodiments illustrated in the FIGS. The choice of upper and lower is one of choice for ease of description.

The upper and lower divergent flaps 58 and 60 have inwardly facing upper and lower flap surfaces 74 and 76, respectively, which together with the sidewalls 70 and 72 define, at least a part of an exhaust stream flowpath 80 therebetween. The upper and lower flap surfaces 74 and 76 have respective upper and lower apexes 84 and 86 wherein the upper apex is axially spaced apart and aft of the lower apex. The upper divergent flap 58 has an expansion ramp 88 diverging away from the nozzle axis 68 and includes a ramp section 90 of the upper flap surface 74 that extends aftwardly from the upper apex 84 and aftwardly of a trailing edge 92 of the lower divergent flap 60.

The exemplary embodiment of the nozzle 50 further includes transversely spaced apart upper and lower convergent flap axes 96 and 98 and upper and lower divergent flap axes 100 and 102, respectively, extending widthwise between the sidewalls 70 and 72. The upper and lower convergent flaps 54 and 56 are rotatable about the upper and lower convergent flap axes 96 and 98, respectively. The upper and lower divergent flaps 58 and 60 are rotatable about the upper and lower divergent flap axes 100 and 102, respectively. This provides the nozzle 50 with the ability to vector the thrust of the engine by vectoring an exhaust flow 104 out of the nozzle 50.

In the exemplary embodiment of the invention the upper and lower divergent flaps 58 and 60 are rotatably attached to downstream ends 106 of the upper and lower convergent flaps 54 and 56 along the upper and lower divergent flap axes 100 and 102, respectively. The upper and lower divergent flaps 58 and 60 are operably rotatable to angularly vector the exhaust flow 104 aft of the upper and lower apexes 84 and 86 upwardly 130 and downwardly 134 with respect to the nozzle axis 68. The upper and lower divergent flaps 58 and 60 are movable to block a line of sight along the nozzle axis 68 through a nozzle exit 108 of the nozzle 50 during engine operation. The divergent flaps may be positioned to block a range of lines of sight through the nozzle exit at acute angles to the nozzle axis. A throat 110 extends generally transversely across the exhaust stream flowpath 80 between a first position 112 on the lower apex 86 to a second position 114 on the upper divergent flap 58 upstream of the upper apex 84. The upper divergent flap 58 is generally convex and the lower divergent flap 60 is generally concave between the upper and lower apexes 84 and 86, respectively. The exhaust stream flowpath 80 diverges in the downstream direction 64 between the lower apex 86 and the upper apex 84.

The nozzle 50 may include an air flow injection means 120 for injecting air through air injection apertures 122 in at least one of the upper and lower divergent flaps 58 and 60 and the sidewalls 70 and 72 as illustrated in FIGS. 1 and 3. This technique is also referred to as fluidic nozzle injection and it is known to use a fluidic nozzle for both pitch and yaw thrust vectoring. The air flow injection means 120 may include at least one row 124 of the air injection apertures 122 in each of the upper and lower divergent flaps 58 and 60 and sidewalls 70 and 72. The air injection apertures 122 may be located in at least one plane 128 normal to the exhaust flow 104 in the exhaust stream flowpath 80 along the upper apex 84 as illustrated herein. Other arrangements of the air injection apertures 122 may include longitudinally and transversely spaced apart arrays of the air injection apertures on one or all of the upper and lower divergent flaps 58 and 60 and the sidewalls 70 and 72.

Referring to FIGS. 1, 2 and 6, the exemplary embodiment of the nozzle 50 further includes, extending longitudinally in the downstream direction 64 along the nozzle axis 68 and in downstream serial flow relationship, a convergent section 140 and a divergent section 142 and the throat 110 therebetween. The convergent section 140 includes, in downstream serial flow relationship, transversely spaced apart upper and lower convergent non-rotatable walls 146 and 148, respectively, upper and lower rotatable reverser doors 150 and 152, respectively, and the upper and lower convergent flaps 54 and 56 extending longitudinally in the downstream direction 64 along the nozzle axis 68 and disposed between the two widthwise spaced apart sidewalls 70 and 72. Transversely spaced apart upper and lower reverser door axes 156 and 158, respectively, extend widthwise between the sidewalls 70 and 72 and the upper and lower reverser doors 150 and 152 are rotatable about the upper and lower reverser door axes, respectively. The upper and lower reverser doors 150 and 152 rotatably open to upper and lower reverse air flow passages 160 and 162, respectively, angled in an upstream direction 164 from the exhaust stream flowpath 80 to outside of the nozzle 50. In the exemplary embodiment of the invention, the upper and lower reverser door axes 156 and 158 are collinear with the upper and lower convergent flap axes 96 and 98.

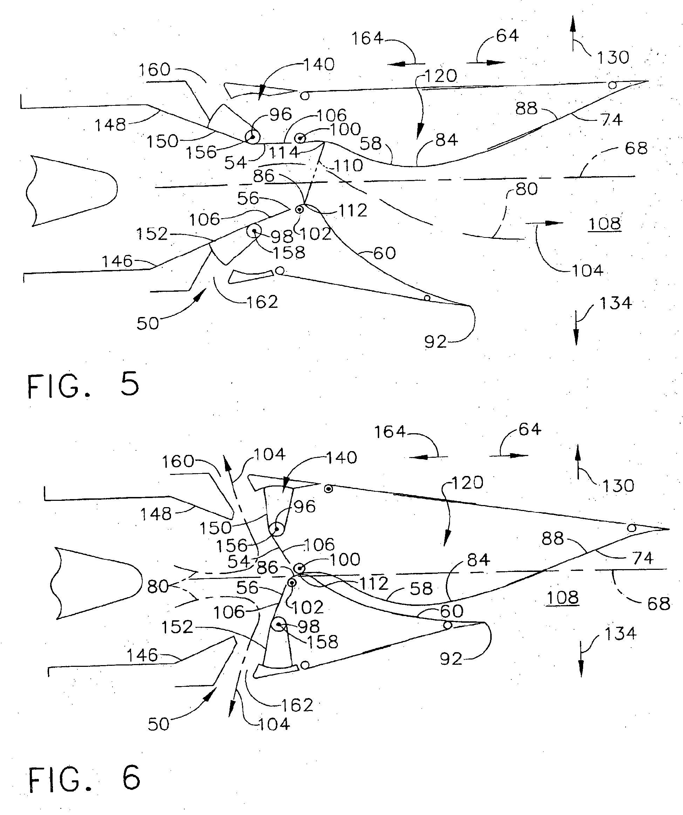

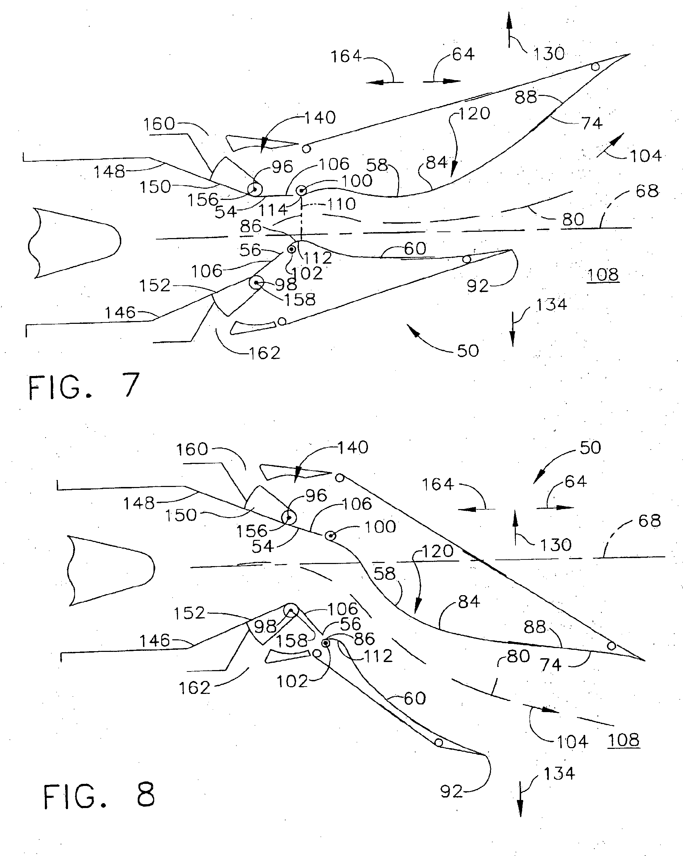

FIG. 4 illustrates the nozzle 50 configured for supersonic and subsonic cruise and the upper and lower divergent and convergent flaps 54, 56, 58, 60 are positioned such that the upper and lower apexes 84 and 86 are positioned on the nozzle axis 68 such that the upper and lower divergent flaps 58,60 block the line of sight along the nozzle axis 68 through the exit 108 of the nozzle 50. FIG. 5 illustrates the nozzle 50 configured wide open as it may be operated during takeoff or for maximum thrust. FIG. 7 illustrates the nozzle 50 configured for pitch thrust vectoring in the upward direction and FIG. 8 illustrates the nozzle 50 configured for pitch thrust vectoring in the downward direction.

FIG. 6 illustrates the nozzle 50 configured for reverse thrust. The upper and lower reverser doors 150 and 152 are illustrated in a rotated open position and the upper and lower reverse air flow passages 160 and 162, respectively, are open. The upper and lower convergent flaps 54 and 56 are in a position rotated towards the nozzle axis 68 so as to close off the exhaust stream flowpath 80 and prevent the exhaust flow 104 to flow out the nozzle exit 108. This causes substantially all of the exhaust flow 104 to flow out the upper and lower reverse air flow passages 160 and 162, thus, providing reverse thrust for the engine 10.

## Claims

1. A two dimensional gas turbine engine exhaust nozzle (50) comprising:
transversely spaced apart upper and lower convergent and divergent flaps (54, 56; 58, 60) extending longitudinally in a downstream direction (64) along a nozzle axis (68) and disposed between two widthwise spaced apart sidewalls (70, 72),
said upper and lower divergent flaps (58, 60) having inwardly facing upper and lower flap surfaces (74, 76) defining together with said sidewalls (70, 72) at least a part of an exhaust stream flowpath (80) therebetween,
said upper and lower flap surfaces (74, 76) having respective upper and lower apexes (84, 86) wherein said upper apex (84) is axially spaced apart and aft of said lower apex (86), and
said upper divergent flap (58) having an expansion ramp (88) diverging away from said nozzle axis (68), including a ramp section (90) of said upper flap surface (74) extending aftwardly from said upper apex (84) and extending aftwardly of a trailing edge (92) of said lower divergent flap (60);
**characterized in that**:
said nozzle further comprises transversely spaced apart upper and lower convergent and divergent flap axes (96, 98; 100, 102) extending widthwise between said sidewalls (70, 72), wherein said upper convergent and divergent flaps (54, 58) are rotatable about said upper convergent and divergent flap axes (96, 100) and said lower convergent and divergent flaps (56, 60) are rotatable about said lower convergent and divergent flap axes (98, 102) respectively.

2. A nozzle (50) as claimed in claim 1, wherein said upper and lower divergent flaps (58, 60) are rotatably attached to downstream ends (52) of said upper and lower convergent flaps (54, 56) along said upper and lower divergent flap axes (100, 102) respectively.

3. A nozzle (50) as claimed in claim 2, wherein said upper and lower divergent flaps (58, 60) are operably rotatable to angularly vector an exhaust flow (104) aft of said apexes (84, 86) upwardly and downwardly with respect to said nozzle axis (68).

4. A nozzle (50) as claimed in claim 1, wherein said upper and lower divergent flaps (58, 60) are operably movable to block a line of sight along said nozzle axis (68) through an exit (108) of the nozzle during engine operation.

5. A nozzle (50) as claimed in claim 2, further comprising a throat (110) extending generally transversely across said exhaust stream flowpath (80)
between a first position (112) on said lower apex to a second position (114) on said upper divergent flap (58) downstream of said upper flap axis.

6. The two dimensional gas turbine engine exhaust nozzle (50) recited in claim 1, comprising:
extending longitudinally in the downstream direction (64) along the nozzle axis (68) and in downstream serial flow relationship, a convergent section (140) and a divergent section (142) and a throat (110) therebetween;
said convergent section (140) including in downstream serial flow relationship transversely spaced apart upper and lower convergent non-rotatable walls (146, 148), rotatable upper and lower reverser doors (150, 152), and said upper and lower convergent flaps (54, 56) extending longitudinally in said downstream direction along said nozzle axis (68) and disposed between two widthwise spaced apart sidewalls (70, 72);
transversely spaced apart upper and lower reverser door axes (156, 158) extending widthwise between said sidewalls (70, 72) wherein said upper and lower reverser doors (150, 152) are rotatable about said upper and lower reverser door axes (156, 158) respectively and open to upper and lower reverse air flow passages (160, 162) angled in an upstream direction (164) from said exhaust stream flowpath (80) to outside of the nozzle (50);
said divergent section (142) including said upper and lower divergent flaps (58, 60) extending longitudinally in said downstream direction along said nozzle axis (68) and disposed between said two widthwise spaced apart sidewalls (70, 72).

## Patentansprüche

1. Zweidimensionale Gasturbinenmotorabgasdüse (50), umfassend:
quer beabstandete, obere und untere, konvergente und divergente Klappen (54, 56; 58, 60), die längs in einer stromabwärtigen Richtung (64) entlang einer Düsenachse (68) verlaufen und zwischen zwei, über die Breite beabstandeten Seitenwänden (70, 72) angeordnet sind,
wobei die oberen und unteren, divergenten Klappen (58, 60) nach innen gekehrte, obere und untere Klappenflächen (74, 76) aufweisen, die zusammen mit den Seitenwänden (70, 72) zumindest ein Teil eines Abgasstromflusswegs (80) dazwischen definieren,
wobei die oberen und unteren Klappenflächen (74, 76) jeweilige obere und untere Scheitelpunkte (84, 86) aufweisen, wobei der obere Scheitelpunkt (84) axial beabstandet zum und hinter dem unteren Scheitelpunkt (86) liegt, und
wobei die obere divergente Klappe (58) eine Ausdehnungsrampe (88) aufweist, die von der Düsenachse (68) weg divergiert und eine Rampensektion (90) der oberen Klappenfläche (74) enthält, die vom oberen Scheitelpunkt (84) nach hinten verläuft und von einer Hinterkante (92) der unteren divergenten Klappe (60) nach hinten verläuft;
**dadurch gekennzeichnet, dass**:
die Düse ferner quer beabstandete, obere und untere, konvergente und divergente Klappenachsen (96, 98; 100, 102) umfasst, die über die Breite zwischen den Seitenwänden (70, 72) verlaufen, wobei die oberen konvergenten und divergenten Klappen (54, 58) um die oberen konvergenten und divergenten Klappenachsen (96, 100) drehbar sind bzw. die unteren konvergenten und divergenten Klappen (56, 60) um die unteren konvergenten und divergenten Klappenachsen (98, 102) drehbar sind.

2. Düse (50) nach Anspruch 1, wobei die oberen und unteren divergenten Klappen (58, 60) jeweils drehbar an stromabwärtigen Enden (52) der oberen und unteren konvergenten Klappen (54, 56) entlang der oberen und unteren divergenten Klappenachsen (100, 102) angebracht sind.

3. Düse (50) nach Anspruch 2, wobei die oberen und unteren divergenten Klappen (58, 60) betriebsfähig drehbar sind, um einen Abgasfluss (104) hinter den Scheitelpunkten (84, 86) nach oben und nach unten bezüglich der Düsenachse (68) winklig zu vektorisieren.

4. Düse (50) nach Anspruch 1, wobei die oberen und unteren divergenten Klappen (58, 60) betriebsfähig beweglich sind, um eine Sichtlinie entlang der Düsenachse (68) durch einen Austritt (108) der Düse während des Motorbetriebs zu blockieren.

5. Düse (50) nach Anspruch 2, ferner umfassend einen Hals (110), der im Allgemeinen quer über den Abgasstromflussweg (80) zwischen einer ersten Position (112) auf dem unteren Scheitelpunkt und einer zweiten Position (114) auf den oberen divergenten Klappen (58) stromabwärts von der oberen Klappenachse verläuft.

6. Zweidimensionale Gasturbinenmotorabgasdüse (50) nach Anspruch 1, umfassend:
längs verlaufend in der stromabwärtigen Richtung (64) entlang der Düsenachse (68) und in einer stromabwärtigen Reihenflussbeziehung, eine konvergente Sektion (140) und eine divergente Sektion (142) und einen Hals (110) dazwischen;
die konvergente Sektion (140), die in stromabwärtiger Reihenflussbeziehung quer beabstandete, obere und untere, konvergente, nicht drehbare Wände (146, 148), drehbare obere und untere Umkehrertore (150, 152) und die oberen und unteren konvergenten Klappen (54, 56) enthält, die längs in der stromabwärtigen Richtung entlang der Düsenachse (68) verlaufen und zwischen zwei über die Breite beabstandeten Seitenwänden (70, 72) angeordnet sind;
quer beabstandete, obere und untere Umkehrertorachsen (156, 158), die über die Breite zwischen den Seitenwänden (70, 72) verlaufen, wobei die oberen und unteren Umkehrertore (150, 152) jeweils um die oberen und unteren Umkehrertorachsen (156, 158) drehbar sind und zu oberen und unteren Umkehrluftflussdurchgängen (160, 162) öffnen, die in einer stromaufwärtigen Richtung (164) vom Abgasstromflussweg (80) zur Außenseite der Düse (50) abgewinkelt sind;
die divergente Sektion (142), die die oberen und unteren divergenten Klappen (58, 60) enthalten, welche längs in der stromabwärtigen Richtung entlang der Düsenachse (68) verlaufen und zwischen den zwei über die Breite beabstandeten Seitenwänden (70, 72) angeordnet sind.

## Revendications

1. Tuyère d'échappement de moteur à turbine à gaz bidimensionnelle (50), comprenant:
des volets convergents et divergents supérieurs et inférieurs (54, 56 ; 58, 60) espacés transversalement, s'étendant longitudinalement dans une direction aval (64) le long d'un axe de tuyère (68) et disposés entre deux parois latérales (70, 72) espacées l'une de l'autre dans le sens de la largeur,
lesdits volets supérieur et inférieur divergents (58, 60) ayant des surfaces de volet supérieure et inférieure (74, 76) tournées vers l'intérieur et définissant conjointement avec lesdites parois latérales (70, 72) au moins une partie du trajet d'écoulement de courant d'échappement (80) entre elles,
lesdites surfaces de volet supérieure et inférieure (74, 76) ayant des sommets supérieur et inférieur respectifs (84, 86), dans laquelle ledit sommet supérieur (84) est axialement espacé dudit sommet inférieur (86) et disposé à l'arrière de celui-ci, et
ledit volet supérieur divergent (58) ayant une rampe d'expansion (88) divergeant dudit axe de tuyère (68), comprenant une section de rampe (90) de ladite surface de volet supérieure (74) s'étendant vers l'arrière dudit sommet supérieur (84) et s'étendant vers l'arrière d'un bord de fuite (92) dudit volet inférieur divergent (60) ;
**caractérisée en ce que** :
ladite tuyère comprend en outre des axes de volet supérieurs et inférieurs convergents et divergents (96, 98 ; 100, 102) espacés transversalement et s'étendant dans le sens de la largeur entre lesdites parois latérales (70, 72), dans laquelle lesdits volets supérieurs convergent et divergent (54, 58) peuvent tourner autour desdits axes de volet supérieurs convergent et divergent (96, 100) et lesdits volets inférieurs convergent et divergent (56, 60) peuvent tourner autour desdits axes de volet inférieurs convergent et divergent (98, 102), respectivement.

2. Tuyère (50) selon la revendication 1, dans laquelle lesdits volets supérieur et inférieur divergents (58, 60) sont fixés à rotation aux extrémités aval (52) desdits volets supérieur et inférieur convergents (54, 56) le long desdits axes de volet supérieur et inférieur divergents (100, 102), respectivement.

3. Tuyère (50) selon la revendication 2, dans laquelle lesdits volets supérieur et inférieur divergents (58, 60) peuvent tourner en service pour vectoriser au plan angulaire un flux d'échappement (104) à l'arrière desdits sommes (84, 86) vers le haut et le bas par rapport audit axe de tuyère (68).

4. Tuyère (50) selon la revendication 1, dans laquelle lesdits volets supérieur et inférieur divergents (58, 60) peuvent se déplacer en service pour bloquer une ligne de vision le long dudit axe de tuyère (68) à travers une sortie (108) de la tuyère au cours du fonctionnement du moteur.

5. Tuyère (50) selon la revendication 2, comprenant en outre une gorge (110) s'étendant de manière générale transversalement en travers dudit trajet d'écoulement de courant d'échappement (80) entre une première position (112) sur ledit sommet inférieur et une seconde position (114) sur ledit volet supérieur divergent (58) en aval dudit axe de volet supérieur.

6. Tuyère d'échappement de moteur à turbine à gaz bidimensionnelle (50) selon la revendication 1, comprenant :
une section convergente (140) et une section divergente (142) s'étendant longitudinalement dans la direction aval (64) le long de l'axe de tuyère (68) et en relation d'écoulement sériel aval, ainsi qu'une gorge (110) entre elles ;
ladite section convergente (140) comprenant en relation d'écoulement sériel aval des parois non rotatives supérieure et inférieure convergentes (146, 148) espacées transversalement, des portes d'inverseur supérieure et inférieure rotatives (150, 152), lesdits volets supérieur et inférieur convergents (54, 56) s'étendant longitudinalement dans ladite direction aval le long dudit axe de tuyère (68) et étant disposés entre deux parois latérales (70, 72) espacées l'une de l'autre dans le sens de la largeur ;
des axes de portes d'inverseur supérieur et inférieur (156, 158) espacés transversalement l'un de l'autre et s'étendant dans le sens de la largeur entre lesdites parois latérales (70, 72), dans laquelle lesdites portes d'inverseur supérieure et inférieure (150, 152) peuvent tourner autour desdits axes de porte d'inverseur supérieur et inférieur (156, 158), respectivement et s'ouvrent sur des passages d'écoulement d'air inverse supérieur et inférieur (160, 162) inclinés dans la direction amont (164) dudit trajet d'écoulement de courant d'échappement (80) à l'extérieur de la tuyère (50) ;
ladite section divergente (142) comprenant lesdits volets supérieur et inférieur divergents (58, 60) s'étendant longitudinalement dans ladite direction aval le long dudit axe de tuyère (68) et étant disposés entre lesdites deux parois latérales (70, 72) espacées l'une de l'autre dans le sens de la largeur.
